# EUROPEAN PATENT APPLICATION

(11) **EP 4 464 504 A1**
(43) Date of publication of application: **20.11.2024**
(21) Application number: 24174968.8
(22) Date of filing: 08.05.2024
(51) Int. Cl.: B29C 70/48, B29C 70/24, B29C 70/44, D03D 25/00, D03D 1/00, B32B 5/02, B29B 11/16

(54) **THREE DIMENSIONAL PREFORM BASED THERMOPLASTIC COMPOSITE PANELS FOR BALLISTIC APPLICATIONS FORMED BY COMPRESSION RESIN TRANSFER MOLDING**

(30) Priority: 19.05.2023 IN 202311035128; 11.07.2023 US 202318350448
(71) Applicant: B/E Aerospace, Inc., Winston-Salem, NC 27105 (US)
(72) Inventor: JOSE, Deepa, Belfast, BT8 8GJ (GB); G, Ajeesh, 560016 Bangalosre, KA (IN)
(74) Representative: Dehns

(57) **Abstract**

A system of manufacturing a ballistic material is disclosed herein. The system includes a preform (108) including a three-dimensional woven fabric, a mold including a cavity (102a), the cavity (102a) configured to receive the preform (108), and a port (110) formed through the mold and into the cavity (102a), wherein the port (110) is configured to introduce a resin (112) into the cavity (102a), the resin (112) filling the cavity (102a) and penetrating into the preform (108).

## Description

### CROSS-REFERENCE TO RELATED APPLICATIONS

This application claims priority to, and the benefit of, India Patent Provisional Application No. 202311035128, filed May 19, 2023 (DAS Code 0F9F) titled "THREE DIMENSIONAL PREFORM BASED THERMOPLASTIC COMPOSITE PANELS FOR BALLISTIC APPLICATIONS FORMED BY COMPRESSION RESIN TRANSFER MOLDING".

### FIELD

The present disclosure generally relates to resin transfer molding, and more particularly, to compression resin transfer molding.

### BACKGROUND

Currently, ballistic panels that are used in many applications are manufactured by press curing of phenolic polyvinyl butyral (PVB) Aramid two-dimensional (2D) woven pre-impregnated preforms (prepregs). These prepregs contain thermoset resin and reinforcement in the 2D preform. To meet current threat compliance standards, very thick panels are being used, which make the product heavier.

### SUMMARY

Disclosed herein is a system including a preform including a three-dimensional woven fabric, a mold including a cavity, the cavity configured to receive the preform, and a port formed through the mold and into the cavity, wherein the port is configured to introduce a resin into the cavity, the resin filling the cavity and penetrating into the preform.

In various embodiments, the mold further includes an upper portion and a lower portion, the lower portion defining the cavity, wherein the upper portion and the lower portion are configured to seal the preform in the cavity. In various embodiments, the resin is a thermoplastic resin. In various embodiments, the resin includes one of a polymethyl methacrylate resin, a methacrylate resin, an acrylate resin, or a monomer resin.

In various embodiments, the preform includes one of a three-dimensional carbon fiber, a three-dimensional glass fiber, or an aramid fiber. In various embodiments, the mold is configured to compress the resin and the preform after the resin is introduced into the cavity. In various embodiments, compressing the resin and the mold causes the resin to evenly distribute throughout the preform. In various embodiments, the mold is further configured to cure the resin in the preform, forming a monolithic composite material. In various embodiments, the preform has first thickness and the monolithic composite material has a second thickness that is greater than the first thickness.

Also disclosed herein is a method including introducing a preform into a mold, the preform including a three-dimensional woven fiber, introducing a resin into the mold so that the resin penetrates into the preform, and curing the resin in the preform to form a monolithic composite material.

In various embodiments, the mold includes an upper portion and a lower portion and the method further includes introducing the preform into a cavity formed in the lower portion and closing the upper portion onto the lower portion, sealing the preform in the mold. In various embodiments, the resin is a thermoplastic resin. The resin includes one of a polymethyl methacrylate resin, a methacrylate resin, an acrylate resin, or a monomer resin.

In various embodiments, the preform includes one of a three-dimensional carbon fiber, a three-dimensional glass fiber, or an aramid fiber. In various embodiments, the method further includes compressing the mold to push the resin into the preform, after introducing the resin into the mold. In various embodiments, the compressing the mold causes the resin to evenly distribute through the preform. In various embodiments, the preform has first thickness and the monolithic composite material has a second thickness that is greater than the first thickness.

In various embodiments, the method further includes removing the monolithic composite material from the mold and securing the monolithic composite material to a panel. In various embodiments, the monolithic composite material is welded to the panel.

Also disclosed herein is a method including introducing a preform into a cavity of a mold, the preform including a three-dimensional woven fabric, sealing the preform in the mold,
introducing a thermoplastic resin into the mold, the thermoplastic resin penetrating the preform, compressing the mold to push the thermoplastic resin into the preform, and curing the thermoplastic resin in the mold to form a monolithic composite material including the preform and the cured thermoplastic resin.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A-1F illustrate steps of forming a composite panel using a compression resin transfer molding process, in accordance with various embodiments.
FIG. 2 illustrates a flow diagram of a method of forming a composite panel using a compression resin transfer molding process, in accordance with various embodiments.
FIGS. 3A, 3B, 3C, and 3D illustrate three-dimensional woven fabric structures, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein are systems and methods for manufacturing light weight ballistic panels using a compression resin transfer molding (RTM) process. In various embodiments, a preform is injected with a resin to form the lightweight ballistic panels. In various embodiments, the preform may be a three-dimensional (3D) woven fabric having fibers woven along the length, width, and height of the preform. In various embodiments, the 3D woven fabric may include a 3D carbon fiber, a 3D glass fiber, and/or an aramid fiber (e.g., para-aramid and/or meta-aramid and/or combinations of the same), among others. In various embodiments, the preform may be introduced to a mold that is closed around the preform. In various embodiments, a resin may be introduced to the mold and be infused into the preform. In various embodiments, the resin may be a thermoplastic resin. In various embodiments, the resin may be a polymethyl methacrylate (PMMA) resin, a methacrylate resin (e.g., Elium ^{®} sold by Arkema), an acrylate resin, or other monomer resin, among others. In various embodiments, the resin may contain fire retardant additives to meet fire, smoke, and toxicity compliance standards. In various embodiments, the mold is compressed to push the resin into the preform and distributed the resin throughout the preform. In various embodiments, the resin is cured at a temperature of about 20° C (about 68° F) to about 80° C (about 176° F). In various embodiments, the composite material including the cured resin and the preform may be welded, or otherwise secured, to a secondary material to form a panel for use in an aircraft, for example.

As described herein, the composite material including the preform and the cured resin provides an improved penetration resistance to other materials. The systems and methods described herein allow for manufacturing the composite material at a lighter weight and, in various embodiments, a reduced price. In various embodiments, the composite material may be capable of resisting complete penetration of a 124-grain (8.0 g) 9 mm parabellum full metal jacket (FMJ) and a 240-grain (15.6 g) 44 magnum jacketed hollow point (JHP) round, each round propelled at a velocity of 436 m/s (1430 ft/s) from a distance of 5 meters (196.85 in) ± 25 mm (1.0 in). In various embodiments, the composite material may be capable of resisting complete penetration of both rounds from various angles (e.g., 0°, 30°, etc.) and multiple rounds (e.g., 12 rounds).

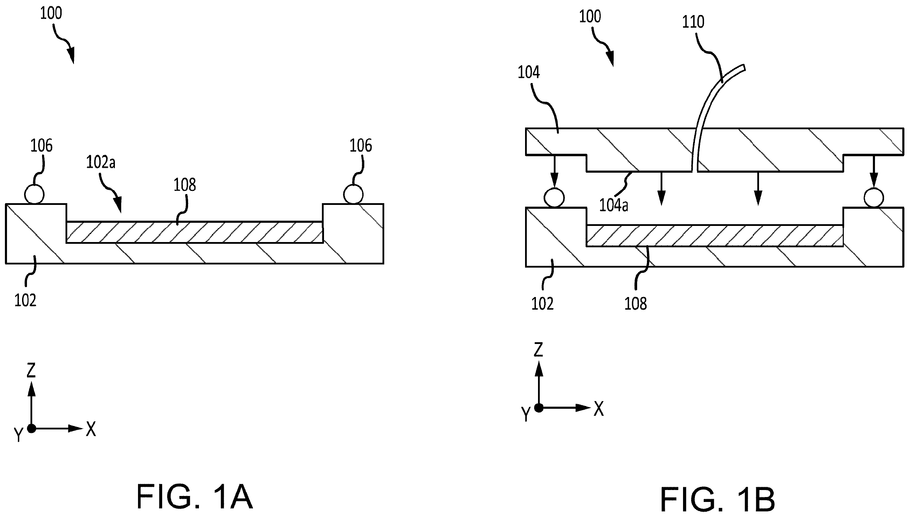

Referring now to FIGS. 1A-1F, a system 100 for forming composite panels using compression resin transfer molding (RTM) is illustrated, in accordance with various embodiments. System 100 includes a lower mold 102, an upper mold 104, spacers 106, a preform 108, and a port 110 extending through upper mold 104. FIGS. 1A-1F illustrate a cross section of lower mold 102, upper mold 104, and preform 108 for illustrative and discussion purposes. It should be understood that lower mold 102 and upper mold 104 may be fulling enclosed and may, in various embodiments, have any shape for use in forming the composite panels such as, for example, rectangular, square, oval, circular, or hexagonal, among others.

Referring to FIGS. 1A and 1B, preform 108 is introduced to lower mold 102 and upper mold 104 is placed into position over preform 108. Lower mold 102 includes a cavity 102a configured to receive preform 108. In various embodiments, preform 108 fills cavity 102a of lower mold 102, as illustrated in FIG. 1A. In various embodiments, preform 108 is smaller than cavity 102a of lower mold 102. Upper mold 104 is configured to engage spacers 106 as it is closed. In various embodiments, spacers 106 may be rigid or flexible. In various embodiments, spacers 106 are configured to ensure a proper seal between lower mold 102 and upper mold 104. In various embodiments, upper mold 104 includes a portion 104a that is configured to extend into cavity 102a of lower mold 102 to provide a seal for cavity 102a. In various embodiments, portion 104a does not extend into cavity 102a.

In various embodiments, preform 108 may be a three-dimensional (3D) woven fabric. That is, the material used to form preform 108 is woven along the length (e.g., the x-direction), the width (e.g., the y-direction), and the height (e.g., the z-direction) of the 3D woven fabric. That is, the fibers are woven together in three-dimensions (i.e., along the length, width, and height) and not by introducing the third dimension to a two-dimensional weaving (e.g., along the length and width) using a needle, which may damage the already present fibers. For this reason, the 3D woven fabric as described herein is superior for ballistic resistance purposes relative to fabric made using z-needling processes that either push fibers woven in two dimensions into a third dimension or introduce a new fiber in the third dimension by a needle after the fibers are woven into the first two dimensions. In various embodiments, preform 108 may be a 3D carbon, a 3D glass, an Aramid material (e.g., Kevlar^{®} sold by Dupont), or a meta aramid material (e.g., nomex^{™}), among others. In various, embodiments, preform 108 may be a lay-up preform including multiple woven layers where each layer is woven along the length (e.g., x-direction) and the width (e.g., the y-direction) of the fabric layers. In various embodiments, preform 108 includes a continuous fiber weaving in three dimensions. In various embodiments, the preform may be about 2 mm (about 0.0787 inch) to about 8 mm (about 0.315 inch) thick (e.g., in the z-direction), and more specifically about 3 mm (about 0.118 inch) to about 5 mm (about 0.197 inch) thick. In various embodiments, using a dry preform (e.g., preform 108) as described herein reduces manufacturing costs as compared to conventional use of a "wet" preform (i.e., a preform pre-impregnated with resin). In various embodiments, the 3D fibers may provide improved energy dissipation as compared to conventional 2D fibers.

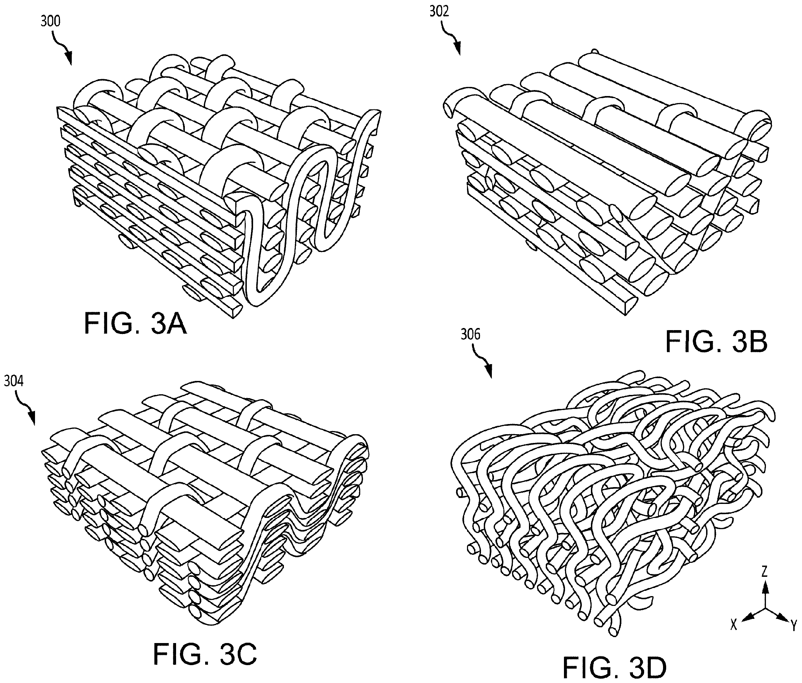

Referring now to FIGS. 3A-3D, 3D woven fabrics 300, 302, 304, 306 are illustrated, in accordance with various embodiments. Preform 108 may be an example of one or more of 3D woven fabrics 300, 302, 304, 306. In various embodiments, the 3D woven fabric of preform 108 may be produced using multiple warp layers. The movement of each group of warp yarns may be governed by separate harnesses so that some are formed into layers, while others weave these layers together. In various embodiments, the 3D woven fabric may include angle-interlock, orthogonal, and/or fully interlaced weaves. Angle-interlock fabrics fall into two main categories depending on the number of layers that the warp weavers travel such as through-the-thickness angle interlock (illustrated in FIG. 3B as fabric 302) and layer-to-layer angle interlock (illustrated in FIG. 3C as fabric 304). In through-the-thickness fabric, warp weavers pass through the entire thickness of the preform, while in layer-to-layer structure, they bind only two filling layers. Orthogonal interlock weaves (illustrated in FIG. 3A as fabric 300), on the other hand, are characterized by warp weavers oriented from orthogonal to other in-plane directions and run through the thickness of the preform (e.g., preform 108). The x-fibers and y-fibers of the angle-interlock and orthogonal structures are not interlaced, whereas the x-fibers are interlaced with both y-fibers and z-fibers in the fully interlaced structure (illustrated in FIG. 3D as fabric 306). It will be appreciated that 3D weaving is capable of producing a wide range of woven fabric designs and architectures that may be used in the manufacture of preform 108.

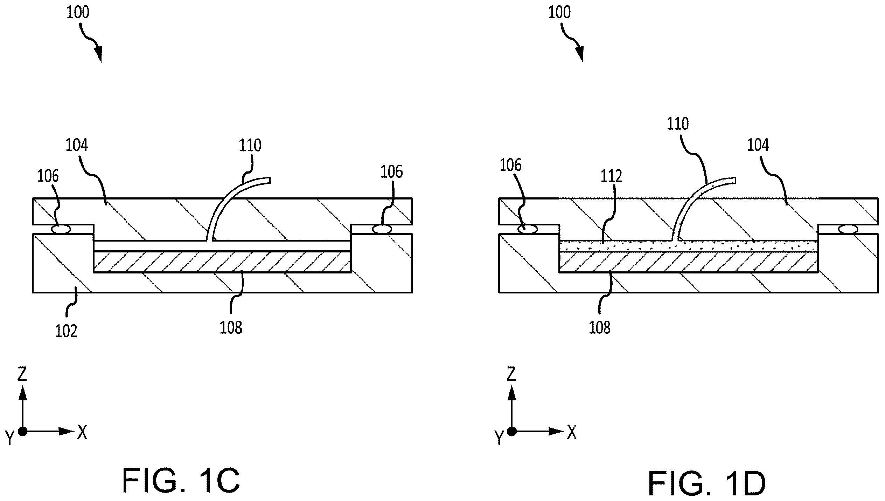

Referring to FIGS. 1C and 1D, upper mold 104 is closed over lower mold 102 forming a seal. A resin 112 is introduced to cavity 102a and preform 108 through port 110. In various embodiments, resin 112 has a low viscosity that is configured to flow through port 110 and into pores of preform 108 including between and around the woven fibers of preform 108. In various embodiments, resin 112 may have a curing temperature of about 20° C (about 68° F) to about 80° C (about 176° F), depending on the type of resin. In various embodiments, resin 112 may be a thermoplastic resin. In various embodiments, resin 112 may be a polymethyl methacrylate (PMMA) resin, a methacrylate resin (e.g., Elium ^{®} sold by Arkema), an acrylate resin, or other monomer resin, among others. As illustrated in FIG. 1D, resin 112 begins to penetrate preform 108. In various embodiments, resin 112 may include non-reactive fire-retardant additives.

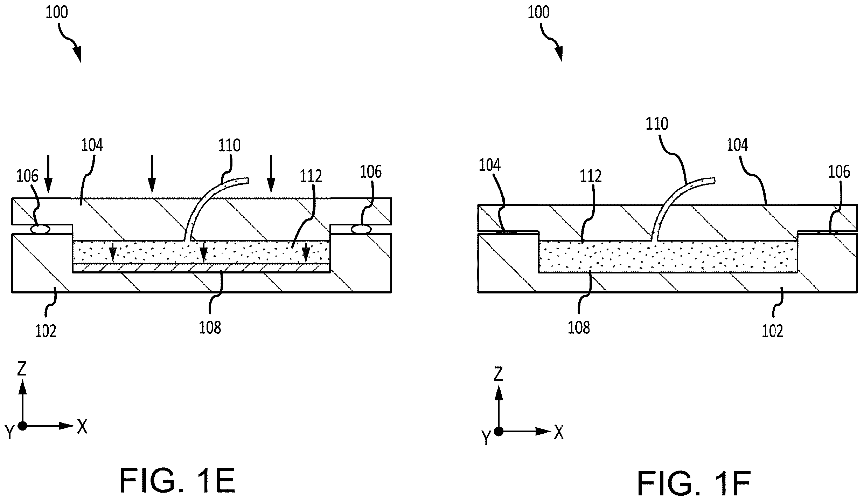

Referring now to FIGS 1E and 1F, resin 112 continues to penetrate, or infuse, into preform 108 and to saturate preform 108, including between and around the woven fibers of preform 108. In various embodiments, upper mold 104 is further pressed into lower mold 102 (e.g., in the negative z-direction) as resin 112 flows into cavity 102a of lower mold and infuses into preform 108. In various embodiments, the flow of resin 112 is stopped before pressing upper mold 104 into lower mold 102. Resin 112 is pressed into preform 108 and is distributed throughout preform 108 in response to upper mold 104 pressing into lower mold 102. In various embodiments, resin 112 is evenly distributed through preform 108 by upper mold 104 pressing in lower mold 102.

Resin 112 is cured to solidify resin 112 in preform 108, forming a single monolithic component that may be used as a panel. In various embodiments, resin 112 may be cured at room temperature (e.g., about 20° C (about 68° F)). In various embodiments, resin 112 may be cured at about 60° C (about 140° F) to about 80° C (about 176° F), and more specifically, about 70° C (about 158° F). In various embodiments, resin 112 may be cured prior to being removed from lower mold 102.

In various embodiments, the cured resin 112 and preform 108 composite material has enhanced penetration resistance. In various embodiments, penetration resistance may include ballistic resistance. The cured resin 112 solidifies and supports the fibers of preform 108 and the fibers of preform 108 provide structural support for the cured resin 112. The combination of the fibers woven in the x, y, and z-directions of preform 108 and the cured resin 112 may improve the penetration resistance of the completed panel. In various embodiments, the composite material including the cured resin 112 and preform 108 may have a thickness of about 3 mm (about 0.118 inch) to about 10 mm (about 0.394 inch), and more specifically, about 5 mm (about 0.197 inch) to about 6 mm (about 0.236 inch). In various embodiments, the use of an amorphous thermoplastic material (e.g., resin 112) instead of a brittle thermoset may improve the structural integrity of the composite material resulting in a material that is less brittle. In various embodiments, resin 112 combined with preform 108 may reduce the overall weight and the manufacturing cost of the composite material.

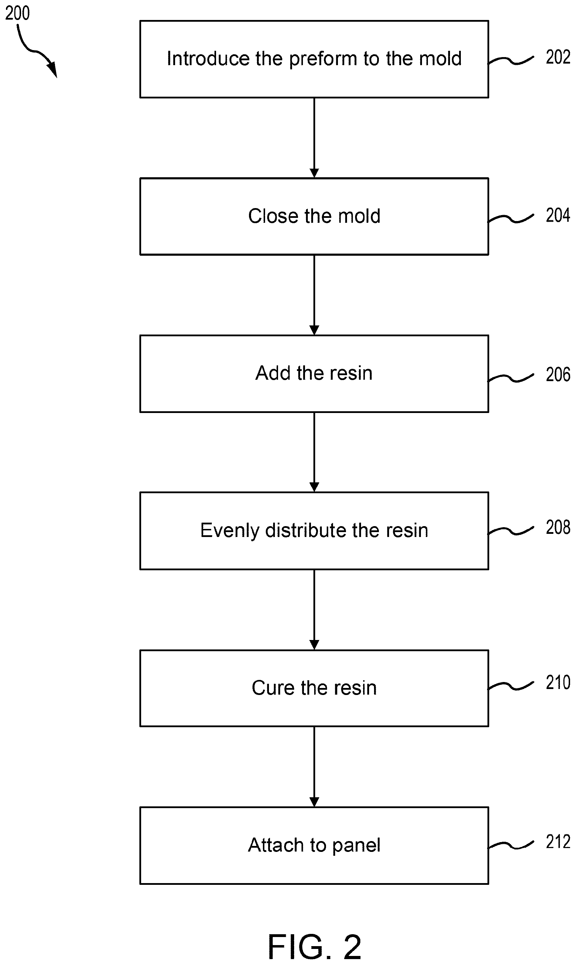

Referring now to FIG. 2, a method 200 of forming a composite panel is illustrated, in accordance with various embodiments. Method 200 may be an example of the method used in system 100 described above in FIGS. 1A-1F. In various embodiments, method 200 may be performed manually by a human operator. In various embodiments, method 200 may be performed by a controller including instructions stored thereon for performing the steps of method 200.

At block 202, a preform (e.g., preform 108) is introduced to a mold (e.g., lower mold 102 and upper mold 104). In various embodiments, the preform may be a three-dimensional (3D) woven fabric having fibers woven along the length (e.g., in the x-direction), the width (e.g., in the y-direction), and the height (e.g., in the z-direction) of the preform. In various embodiments, the preform may a continuous weave material to minimize damage to any of the woven fibers in the preform. In various embodiments, the mold may be rectangular, square, oval, circular, or hexagonal, among other shapes.

At block 204, the mold is closed with the perform located inside the mold. In various embodiments, the mold is closed and sealed but may still have room to close further. In various embodiments the closed mold is hermetically sealed.

At block 206, a resin (e.g., resin 112) is introduced to the mold through a port formed in the mold. The resin flows through the port into the mold to penetrate into and infuse through the preform. In various embodiments, the resin may be a thermoplastic resin. In various embodiments the resin may be a polymethyl methacrylate (PMMA) resin, a methacrylate resin (e.g., Elium ^{®} sold by Arkema), an acrylate resin, or other monomer resin, among others.

At block 208, the resin is distributed through the preform. In various embodiments, the resin is evenly distributed through preform. That is, the concentration of the resin infused in the preform is about constant through the length, width, and height of the preform. In various embodiments, the mold compresses, pushing the resin into and through the preform.

At block 210, the resin cures within the preform to form a single, monolithic composite material. In various embodiments, the resin cures at room temperature (e.g., 20° C (68° F)). In various embodiments the resin cures at about 60° C (about 140° F) to about 80° C (about 176° F), and more specifically, at about 70° C (about 158° F).

At block 212, the composite material (i.e., the cured resin and preform composite) is attached to a panel. In various embodiments, the composite material may be attached without the use of nuts, bolts, joints, etc. In various embodiments, the composite material may be welded to the panel. The panel and joined composite material may then be installed in an airplane or other vehicle to provide a penetration resistant barrier.

As described above, the steps of method 200 may be performed by a controller. The controller may comprise one or more processors configured to implement various logical operations in response to execution of instructions, for example, instructions stored on a non-transitory, tangible, computer-readable medium. The one or more processors can be a general-purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. The controller may further comprise memory to store data, executable instructions, system program instructions, and/or controller instructions to implement the control logic of the controller.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system (100), comprising:
a preform (108) including a three-dimensional woven fabric;
a mold including a cavity (102a), the cavity (102a) configured to receive the preform (108); and
a port (110) formed through the mold and into the cavity (102a), wherein the port (110) is configured to introduce a resin (112) into the cavity (102a), the resin (112) filling the cavity (102a) and penetrating into the preform (108).

2. The system of claim 1, wherein the mold further comprises:
an upper portion (104); and
a lower portion (102), the lower portion (102) defining the cavity (102a), wherein the upper portion (104) and the lower portion (102) are configured to seal the preform (108) in the cavity (102a).

3. The system of claim 1 or 2, wherein the resin (112) is a thermoplastic resin.

4. The system of claim 3, wherein the resin (112) includes one of a polymethyl methacrylate resin, a methacrylate resin, an acrylate resin, or a monomer resin.

5. The system of any preceding claim, wherein the preform (108) includes one of a three-dimensional carbon fiber, a three-dimensional glass fiber, or an aramid fiber.

6. The system of any preceding claim, wherein the mold is configured to compress the resin (112) and the preform (108) after the resin (112) is introduced into the cavity (102a), and optionally wherein compressing the resin (112) and the mold causes the resin (112) to evenly distribute throughout the preform (108).

7. The system of any preceding claim, wherein the mold is further configured to cure the resin (112) in the preform (108), forming a monolithic composite material, and optionally wherein the preform (108) has first thickness and the monolithic composite material has a second thickness that is greater than the first thickness.

8. A method, comprising:
introducing a preform (108) into a mold, the preform (108) including a three-dimensional woven fiber;
introducing a resin (112) into the mold so that the resin (112) penetrates into the preform (108); and
curing the resin (112) in the preform (108) to form a monolithic composite material.

9. The method of claim 8, wherein the mold includes an upper portion (104) and a lower portion (102), the method further comprising:
introducing the preform (108) into a cavity (102a) formed in the lower portion (102); and
closing the upper portion (104) onto the lower portion (102), sealing the preform (108) in the mold.

10. The method of claim 8 or 9, wherein the resin (112) is a thermoplastic resin; and/or
wherein the resin (112) includes one of a polymethyl methacrylate resin, a methacrylate resin, an acrylate resin, or a monomer resin.

11. The method of any of claims 8-10, wherein the preform (108) includes one of a three-dimensional carbon fiber, a three-dimensional glass fiber, or an aramid fiber.

12. The method of any of claims 8-11, further comprising:
compressing the mold to push the resin (112) into the preform (108), after introducing the resin (112) into the mold, and optionally wherein the compressing the mold causes the resin (112) to evenly distribute through the preform (108).

13. The method of any of claims 8-12, wherein the preform (108) has first thickness and the monolithic composite material has a second thickness that is greater than the first thickness.

14. The method of any of claims 8-13, further comprising:
removing the monolithic composite material from the mold; and
securing the monolithic composite material to a panel, and optionally wherein the monolithic composite material is welded to the panel.

15. A method comprising:
introducing a preform (108) into a cavity (102a) of a mold, the preform (108) including a three-dimensional woven fabric;
sealing the preform (108) in the mold;
introducing a thermoplastic resin (112) into the mold, the thermoplastic resin (112) penetrating the preform (108);
compressing the mold to push the thermoplastic resin (112) into the preform (108); and
curing the thermoplastic resin (112) in the mold to form a monolithic composite material including the preform (108) and the cured thermoplastic resin (112).
